# EUROPÄISCHE PATENTANMELDUNG

(11) **EP 0 629 944 A1**
(43) Veröffentlichungstag der Anmeldung: **21.12.1994**
(21) Anmeldenummer: 94107421.3
(22) Anmeldetag: 13.05.1994
(51) Int. Cl.: G06F 9/38

(54) **Datenverarbeitungsmaschine**

(30) Priorität: 18.06.1993 DE 4320263
(71) Anmelder: GSF-Forschungszentrum für Umwelt und Gesundheit, GmbH, D-85758 Oberschleissheim (DE)
(72) Erfinder: Schmidt, Karl-Heinz, D-85653 Aying (DE); Waidelich, Wilhelm, Prof.Dr., D-81479 München (DE); Menache, Georg, Dr., D-80995 München (DE)

(57) **Zusammenfassung**

Die Erfindung betrifft eine Datenverarbeitungsmaschine bestehend aus einen Programmzähler, mindestens einem Datenspeicher, einer Verknüpfungseinheit und einem Akkumulator.

Aufgabe der Erfindung ist es den Zeitbedarf dieser Datenverarbeitungsmaschine deutlich zu reduzieren.

Gelöst wird diese Aufgabe durch zwei Adressenlookuptabellenbausteine, welche zwei Datenspeicher adressieren, deren Daten über eine ansteuerbare Verknüpfungseinheit verknüpft werden.

## Beschreibung

Die Erfindung betrifft eine Datenverarbeitungsmaschine nach dem Oberbegriff des Patentanspruchs 1.

Um umfangreichere Probleme in der Numerik zu bearbeiten, werden immer schnellere Rechenmaschinen entworfen und aufgebaut. Fast alle bisherigen Datenverarbeitungsmaschinen basieren auf der von Neumann Architektur.

Das wesentliche Merkmal der von Neumann Struktur, liegt darin, daß alle Daten und die Anweisungen für den Prozessor in einem logisch zusammenhängenden Speicher untergebracht sind, wobei der Speicher physikalisch aus verschiedenen Komponenten zusammengesetzt sein kann.

Die Abarbeitung der Programme erfolgt durch einen Prozessor, der an den Speicherbaustein angeschlossen ist. Der Prozessor liest aus dem Speicher an einer durch den Befehlszeiger vorgegebenen Stelle ein oder mehrere Datenworte und interpretiert die darin enthaltene Binärzahl als Anweisung, anhand derer Datenworte im Speicher sowie der Befehlszeiger verändert werden. Nach Abschluß der Bearbeitung wird ein neuer Befehl gelesen und abgearbeitet.

Um eine Operation durchzuführen, wird zuerst der Code von einer Adresse D eingelesen. Der Code beinhaltet die Adressen A und B der Operanden a und b und der durchzuführenden Operation. Das Ergebnis wird bei der Adresse C abgespeichert. Der Programmablauf sieht dann so aus:
1) Befehl * lesen,
2) Adresse A lesen,
3) a=[A] lesen und a in den Akkumulator laden
4) Adresse B lesen,
5) b=[B] lesen,
6) Adresse C lesen, und a*b berechnen
7) [C] mit a*b beschreiben.

Für diese Operation sind demnach 7 Speicherzugriffe notwendig. Das bedeutet, daß der Zeitbedarf für diese Operation im günstigsten Fall sieben mal so lang ist, wie die Zugriffszeit t für den Speicher.

Aufgabe der Erfindung ist es nun eine Datenverarbeitungsmaschine der e.g. Art zur Verfügung zu stellen, bei der der Zeitbedarf deutlich reduziert wird.

Diese Aufgabe wird durch die kennzeichnenden Merkmale des Patentanspruchs 1 gelöst. Die Unteransprüche beschreiben vorteilhafte Ausgestaltungen der Datenverarbeitungsmaschine.

Ein besonderer Vorteil der Erfindung liegt darin, daß die Datenverarbeitungsmaschine leicht durch Verwendung von kommerziell erhältlichen Bausteinen realisiert werden kann.

Der Programmablauf für die erfindungsgemäße Maschine sieht dann wie folgt aus:
1) [An] lesen und [Bn] lesen,
2) an * bn berechnen
3) [Cn] mit an * bn beschreiben.

Es sind jetzt nur noch 3 Speicherzugriffe notwendig. Um die Verarbeitung weiter zu beschleunigen verschachtelt man die einzelnen Schritte entsprechend der bekannten Pipelinetechnik ineinander.

Der Zeitbedarf für die Auswertung mit indirekter Adressierung beträgt unter der Vorraussetzung, daß die Operation * nicht länger dauert als ein Speicherzugriff ts. Für große n ergibt sich dann.

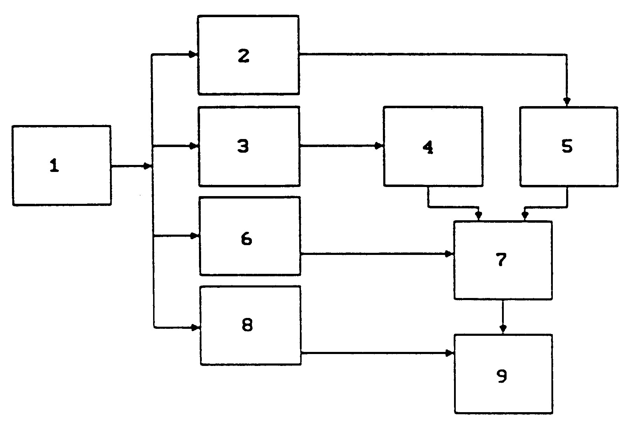

Die Erfindung wird im folgenden anhand eines Ausführungsbeispiels mit Hilfe der Figur näher erläutert.

Die Figur zeigt den Programmzähler 1 welcher die Adressenlookuptabellen 2, 3 und 8, sowie die Befehlslookuptabelle 6 ansteuert.

Die Adressenlookuptabellen 2, 3 und 8 adressieren die Datenspeicher 4, 5 und 9. Die Ausgänge der Speicher 4 und 5 sind mit den Eingängen der Verknüpfungseinheit 7 verbunden. Der Ausgang der Verknüpfungseinheit 7 ist mit dem Eingang des Datenspeichers 9 verbunden.

Der Programmzähler 1 zählt nach dem Start kontinuierlich von 0 bis zum maximalen Wert durch. Bei jedem Schritt werden über die Lookuptabellen 2, 3, 6 und 8 die Speicher 4, 5, und 9 indirekt adressiert, sowie zu jeder Programmzähleradresse eine Funktion für die Verknüpfungseinheit 7 unter Berücksichtigung der in der Pipelinetechnik üblichen Ablauffolge ausgewählt.

Die Adressenlookuptabellen und die Funktionslookuptabellen werden mit Speicherbausteinen realisiert.

Die so angesprochenen Daten in den Speichern 4 und 5 werden zur Verknüpfungseinheit 7 geleitet, wo sie miteinander verknüpft werden. Die Verknüpfungseinheit 7 kann z. B. eine sehr schnelle Logikschaltung oder eine Lookuptabelle mit separatem Akkumulator sein. Die Lookuptabelle liefert auch bei komplizierten Operationen das Ergebnis innerhalb eines Speichertakts.

Bei Operationen mit mehr als zwei Operanden wird eine entsprechende Anzahl von über Adressenlookuptabellen adressierbaren Datenspeichern vorgesehen.

Die Daten am Ausgang der Verknüpfungseinheit 7 werde entweder direkt oder über die Adressenlookuptabelle 8 adressiert in den Speicher 9 eingeschrieben. Die Verknüpfungseinheit 7 enthält einen Akkumulator.

Für einige Operationen ist es sinnvoll die Speicher 4, 5 und 9 unter Beibehaltung der ursprünglichen Adressenzuordnung über die Adressenlookuptabellen 2, 3 und 8 entsprechend dem Stand der Technik über Multiplexer untereinander auszutauschen. Z. B. können die Inhalte der Speicher 9 und 4 durch Vertauschen der Adressen und Datenleitungen der Speicher 4 und 9 miteinander vertauscht werden.

Der Inhalt vom Speicher 9 kann dann mit dem Inhalt des Speichers 5 verknüpft und das Ergebnis in den Speicher 4 geschrieben werden.

Die Daten der Speicher 4, 5 und 9 sowie der Lookuptabellen 2, 3, 8, der Befehlslookuptabelle 6 und der Funktionslookuptabelle 7 werden entsprechend dem Stand der Technik über Multiplexer von einem externen Rechner beschrieben bzw. gelesen.

Im Vergleich zur von Neumann Architektur, bei der das Programm in einem logisch zusammenhängenden Speicher abgelegt ist, ist das Programm für die beschriebene Datenverarbeitungsmaschine in den Adressenlookuptabellen 2, 3 und 6 sowie der Befehlslookuptabelle 6 und evtl. der Funktionslookuptabelle 7 abgelegt.

Beim Pipelineprozeß werden pro Takt die Adressen für die Datenspeicher 4, 5 und 9, und die Operation für die Verknüpfungseinheit 7 bereitgestellt. Bei großen Datenmengen ergibt sich daher eine Verarbeitungsgeschwindigkeit von einer Operation mit mindestens 2 Operanden pro Taktschritt.

Im Gegensatz dazu braucht ein Rechner mit von Neumann Architektur 7 Taktschritte für die gleiche Operation für höchstens zwei Operanden.

Programmverzweigungen sind nicht mehr so einfach zu realisieren wie beim von Neumann Rechner.

Eine Möglichkeit ist der Einsatz mehrerer Lookuptabellen, die wie beim von-Neumann Rechner in Abhängigkeit eines Ergebnisses im Akkumulator umgeschaltet werden. Die andere Möglichkeit besteht darin, den Wert des Zählers t entsprechend zu berechnen, bzw. zu verändern.

Es erscheint aber nicht sinnvoll, das Verfahren der erfindungsgemäßen Datenverarbeitung als Konkurrenz zum von Neumann Rechner zu sehen, das Verfahren ist vielmehr auch als Ergänzung gedacht, um einfache aber zeitraubende Berechnungen in kurzer Zeit durchführen zu können.

## Patentansprüche

1. Datenverarbeitungsmaschine bestehend aus einem Programmzähler, mindestens zwei Datenspeichern, wobei zwei Datenspeicher indirekt adressierbar sind, einer Verknüpfungseinheit und einem Akkumulator, gekennzeichnet durch:
a) zwei Adressenlookuptabellen (2, 3), welche die zwei Datenspeicher (4, 5) adressieren,
b) eine Verknüpfungseinheit (7), welche die ausgewählten Daten aus den Datenspeichern (4) und (5) miteinander verknüpft, wobei die Art der Verknüpfung über eine Befehlslookuptabelle (6) ausgewählt wird
c) und einen separaten Datenspeicher (9) für die Ergebnisse der Verknüpfung, wobei
d) die Lookuptabellen (2, 3) und (6) über den einen Programmzähler (1) adressiert werden.

2. Datenverarbeitungsmaschine nach Anspruch 1, gekennzeichnet durch eine Adressenlookuptabelle (8) die den Datenspeicher (9) mit Hilfe des Programmzählers (1) adressiert.

3. Datenverarbeitungsmaschine nach Anspruch 1 oder 2, dadurch gekennzeichnet, daß die Verknüpfungseinheit (7) eine Lookuptabelle ist.

4. Datenverarbeitungsmaschine nach einem der Ansprüche 1 bis 3, dadurch gekennzeichnet daß bei mehr als zwei Operanden entsprechend viele über Adressenlookuptabellen adressierbare Datenspeicher zur Verfügung stehen.
